# EUROPEAN PATENT SPECIFICATION

(11) **EP 0 926 608 B1**
(45) Date of publication and mention of the grant of the patent: **10.03.2004**
(21) Application number: 98309352.7
(22) Date of filing: 16.11.1998
(51) Int. Cl.: G06F 17/30

(54) **Distributed persistent storage for intermittently connected clients**
Verteilte dauerhafte Speicher für Benutzer- Anbieter- Systeme mit manchmal unterbrochenen Verbindungen
Stockage persistant distribué pour systèmes clients serveurs avec connections parfois coupées

(30) Priority: 24.12.1997 US 997795
(43) Date of publication of application: 30.06.1999
(73) Proprietor: Nortel Networks Limited, St.Laurent, Québec H4S 2A9 (CA)
(72) Inventor: Chan, Ken Yat-Wan, Ottawa(ario), K2C 3M5 (CA); Parsons, Eric W., Richmond(ario), K0A 2Z0 (CA); Craddock, A. Julian, Greely(ario), K4P 1E7 (CA)
(74) Representative: Mackenzie, Andrew Bryan

(56) References cited:
- EP-A- 0 794 646
- BUTRICO M A ET AL: "Gold Rush: mobile transaction middleware with Java-object replication" PROCEEDINGS OF THE THIRD USENIX CONFERENCE ON OBJECT-ORIENTED TECHNOLOGIES AND SYSTEMS (COOTS), PROCEEDINGS OF COOTS '97: 3RD CONFERENCE ON OBJECT ORIENTED TECHNOLOGIES AND SYSTEMS, PORTLAND, OR, USA, 16-20 JUNE 1997, pages 91-101, XP002142965 1997, Berkeley, CA, USA, USENIX Assoc, USA
- HILD S G ET AL: "MOBILIZING APPLICATIONS" IEEE PERSONAL COMMUNICATIONS,US,IEEE COMMUNICATIONS SOCIETY, vol. 4, no. 5, 1 October 1997 (1997-10-01), pages 26-34, XP000721303 ISSN: 1070-9916

## Description

### Background to the Invention

### Field of the Invention

The present invention relates to methods of maintaining mutual consistency between copies of data stored at nodes in a network, to methods of carrying out an operation on data stored in a network of nodes, to client nodes and to software for such methods.

### Background Art

It is known to provide users with access to databases from terminals at geographically remote locations by passing requests and returning data across multiple networks. However, delays and network congestion may arise, if large amounts of data are returned, or if the characteristics of the networks, or the links between the networks, are not all appropriate, e.g. with respect to bandwidth, latency, or handling highly asymmetric traffic loads. There are various known ways of addressing the problems associated with providing quick access to the data in such databases. Distributing the databases over geographically separated servers is one approach.

It is well known to create such distributed databases, either by dividing the content, or by replicating it in the different locations. The replication may be transparent to the user, or the application, meaning software is provided to interface the application/user to the multiple copies, which maintains the two or more copies up to date without user intervention. To the user/application, it appears as though there is only one copy.

The distribution can be pre structured, or dynamic. An example of the latter is the local caching capability of some databases, which enables them to maintain data which has been accessed by a user, in a cache close to the user. For example, it is known for object oriented databases to provide local object caches. This can improve performance and scalability. To maintaining consistency between the original and the cached or replicated versions, it is known to provide a replication process over a permanent connection. However, if the connection is broken for any length of time, no mechanism is provided for resynchronising data which has become inconsistent.

For instance, an object may migrate to a new machine in order to balance the loads across machines or because its original processor crashed; in this case, the network address maintained by a name service for the object should be updated to reflect its new location. Since the data maintained by storage servers is often subject to change, a check that cached data returned to clients is always valid should be the responsibility of either storage servers or cache managers. Server-initiated cache consistency requires data servers to inform caches whenever data is updated. Client-initiated cache consistency requires cache managers to validate cached data with storage servers before returning it to clients. Particularly for very large internet environments, both approaches are expensive and not very attractive since they involve elaborate cooperation between servers and cache managers. It is known to use techniques, such as update timestamps, to allow the validity of data in caches to be checked without retrieving and comparing it, or without maintaining records of changes.

Nevertheless, in the area of distributed persistent storage, (meaning storage which survives beyond the termination of an application to which it relates) data replication is preferable to the alternatives of dividing and moving portions of a database, or sending queries and returning data across extensive networks. It can address the problems of fault tolerance, high availability and consistency of data. Since most data are changed less than 2% on any given day, the process of managing data changes typically requires far less computer and network resources than data extracts or cross-system queries. Thus, data replication is a new data movement technology that addresses efficient asymmetrically bi-directional data access across multiple systems.

Systems for synchronising the different versions of data (meaning making the copies of data mutually consistent) have been developed for non mobile wired networks. Those systems which cater for intermittent connection, e.g. overnight updates, record transactions, and replay them when the connection is made. For client server systems, the server will determine what changes need to be made to the server copy. Systems for wired networks are not necessarily suitable for mobile wireless linked users,because of the different physical constraints which arise. Such constraints include frequent connection and disconnection, high transmission costs and low bandwidth for wireless links, high latency and limited computing resources, and limited battery life.

One known system for mobile wireless users is called Gold Rush, and is a client/server persistent storage architecture developed mainly by Thomas J. Watson Research Center at IBM. As published in their USENIX paper, (Conference on Object Oriented Technologies and Systems, June 16-20, 1997) Gold Rush is a middleware (meaning it is interface software for converting between other software or protocols) supporting the writing of Java applications that reside on an intermittently connected mobile client device and access an enterprise database on a central server. While the client is connected to the central server, objects constructed from database entities can be cached in a persistent store on the client. While the client is disconnected, these entities can be manipulated within transactions that are logged on the client. Upon reconnection, the client application can replay these logged transactions to the server, modifying the database. A replayed transaction is checked for conflicts with other database updates that have occurred since the client obtained the input data for the transaction, and the client is notified when such a conflict arises. Communication between the client and the server is optimized to economise the use of a slow or expensive connection such as a radio link.

It offers transaction merging and conflict resolution between the client and server. It seems to preserve the transaction semantics pretty well based on the published details. It offers a good client and server persistent storage framework. All transactions of the mobile clients are replayed back to the server upon reconnection. This is a typical data resynchronisation strategy.

A number of problems remain, even with this approach. First, keeping the transaction logs and replaying the log back to server upon reconnection may take too long. Particularly for thin clients, meaning those clients having limited computing resources, e.g. memory and processing power, and connected via a slow link, or able to connect to the server for a very short period of time, the result could be that the mobile client would always be out of sync with the server.

A second problem arises from it being based on a client/server model. The server carries out most of the processing and controls and communicates directly with all the clients. Thus the number of clients which can be serviced will be limited by the processing and communications capabilities of the server.

A third problem arises from the replication being relatively coarse grained, being at the storage/database level. Particularly where there are limitations in the storage capabilities or transmission bandwidth to the client, there may be unacceptable delays, or the client may be unable to handle the replication.

EP0794646A and Hild S G et al "Mobilising Applications" IEEE Personal Communications, US, IEEE Comms Society, Vol 4, No5, 1 Oct 1997, pages 26-34, XP000721303 ISSN:1070-9916 disclose further examples of prior art methods.

### Summary of the Invention

It is an object of the present invention to provide improved methods and apparatus.

According to one aspect of the present invention, there is provided a method of maintaining mutual consistency between copies of data stored at nodes in a network, the nodes comprising a server node, and a number of client nodes at remote locations, the nodes being connected intermittently, the client node comprising applications which make use of the data, the method comprising steps of, at a remote one of the client nodes:
following a reconnection between the remote client node and another of the nodes, receiving from that other node, information relating to a portion of the data of which there is a local copy at the other node, and a remote copy at the remote client node, the information showing how up to date is the local copy;
comparing at the remote client node, the information relating to the remote copy with corresponding information relating to the local copy, to determine if the remote copy is more up to date than the local copy; and
updating the remote copy based on the local copy or enabling the other node to update the local copy, according to the result of the comparison. One of the advantages arising from doing the comparison at the client is that the server need not monitor and control the process, so the system is more easily scaled up to handle more clients. An advantage arising from synchronising based on discarding less recently updated copies is that it means storing transaction records, and replaying them, becomes optional, and can be dispensed with if appropriate. This, in combination with the other features, is particularly advantageous for intermittently connected "thin" remote locations such as palmtop devices with limited memory, which might be unable to store and replay transactions collected over a long period of disconnection. Also, this strategy allows the processing load among the servers and clients be balanced more evenly, and give more autonomy to the clients.

Preferably the method further comprises the step of determining if the content of the remote copy is the same as the content of the local copy, and initiating at the remote node, a conflict resolution process in the event that the comparison does not reveal a difference between the local copy and the remote copy, but the respective contents differ. If the timestamp or the versions of the replicas are the same, but the replicas are different, the client may initiate appropriate conflict resolution strategy, for example prompting user for choices, instead of having the server to make the decision. Initiating this at the client also allows the processing load among the servers and clients be balanced more evenly, and gives more autonomy to the clients.

Preferably the method further comprises the preliminary steps of, during a disconnection, recording which portions have been modified at the other node, wherein the information received by the remote client node relates to the portions recorded by the other node as having been modified. An advantage of this is that it enables the portions needing resynchronisation to be identified quickly and easily.

Preferably the comparison step is carried out for each of the recorded portions, modified during the disconnection, before carrying out the comparison step for a portion modified subsequent to the reconnection. One of the advantages of this is that it avoids redundant synchronization. Upon reconnection, the client resynchronizes objects which are tagged dirty in the dirty bin first. If an application requests to update an object during reconnection, the object that were tagged dirty must resychronize with the network first before the application can proceed to update. If the application is allowed to proceed first, the object may be resychronized more than once because the object would be tagged dirty again and the previous value of the object would be lost.

Preferably the method further comprises the step of locking the remote copy to prevent access to it during the comparison step. An advantage of this is that it can ensure atomicity and prevent recursion. Lookup of dirty objects, version comparisons, object update, and synchronization states of the objects which are tracked by the dirty bin are atomic or synchronized in operation. This means the object involved during a synchronization transaction is exclusively locked. This prevents the state of the sychronization from becoming inconsistent, thus avoiding any possible recursive synchronization. Atomicity means in general terms, that a group of interrelated operations may rely on each others data being consistent without interference from outside operations. Specifically, it means the comparison output will not be invalidated before it is output, by a change in one of the copies being compared.

Preferably the method comprises the preliminary step of determining whether to use the remote copy, according to whether the information relating to the remote copy has been received at the first of the clients. An advantage of this is that availability of data can be improved, which may be particularly significant if connections are short or infrequent. The greedy bit or flag may be turned on to force the current synchronization session to always obtain the latest copy of modified objects. If it is turned off, the application may choose to use the local copy even though the client has reconnected to the network. This provide flexibility to the applications that want to sacrifice consistency to lookup the object quickly.

Preferably the copies of data stored at the nodes comprise a copy of less than all the elements of a database, and the data comprises object oriented data. An advantage of this is that it enables the quantity of data stored at the remote location to be limited, which again is advantageous for intermittently connected "thin" remote locations such as palmtop devices with limited memory capacity. An advantage of applying the method to object oriented data is that much data which mobile users wish to access remotely is already in such form.

Preferably the method further comprises the step of propagating the more up to date copy from the remote client node to a second other node, which also has a copy of the portion of the data, when there is a connection made with the second other node. An advantage of this peer-to-peer model arising from synchronisation being propagated between neighboring locations is that such a distributed approach provides an alternative path to direct connection to the server, and means the server need not keep track of all replicas of an objects throughout the network. This also enables the system to be scaled up more easily to handle more clients, or more data, or more functionality.

Preferably the other node comprises the server node. There is an advantage if the server is connected directly, in that the server is assumed to hold a copy of every portion of the data, and so there will always be a copy to make a comparison with. This is not necessarily the case with other client nodes. Also, as there is more likely to be more access requests to the server than to any one of the clients, it is more important that the server be kept up to date, than any of the clients.

Preferably the method further comprises the steps of storing in the remote client node, a record of transactions involving the remote copy before the comparison step; and remedying at least some of the transactions in the event that the local copy is determined by the comparison step to be more up to date than the remote copy. This can reduce the harmful effects of data inconsistency, and may reduce the burden on applications, or increase reliability, or enable the synchronisation requirements to be relaxed.

According to another aspect of the invention, there is provided a method of carrying out an operation on data stored in a network of nodes, one of the nodes comprising a server, and others of the nodes being client nodes, the nodes being connected intermittently, at least some of the data being cached at a remote one of the client nodes, the method comprising the steps of:
initiating the operation at the remote client;
causing a resynchronisation of the cached data, the resynchronisation comprising the steps of:
   a) causing a reconnection to another of the nodes;
   b) receiving from that other node, information relating to a portion of the cached data of which there is a local copy at the other client, and a remote copy at the remote client node, the information showing how up to date is the local copy;
   c) comparing at the remote client node, the information relating to the remote copy with corresponding information relating to the local copy, to determine if the remote copy is more up to date than the local copy; and
   d) updating the remote copy based on the local copy, according to the result of the comparison; and
completing the operation on the resynchronised cached data.

According to another aspect of the invention, there is provided a client node arranged to use the above methods.

According to another aspect of the invention, there is provided software stored on a computer readable medium for carrying out the above methods.

It is important to note that the architecture set out above is more suitable for ultra thin clients which can not afford to store extra transaction logs and replay the logs to the server. It follows a distributed model, thus is more scalable than prior art frameworks. Also, if replication granularity is at the root object level, a remote location database A may have replicas of objects X and Y, whereas database B may have replicas of objects X and Z, so it is more scalable. The architecture can be thread safe, and if it is built on top of any OODBM, as is preferred, it supports multiple concurrent application access to the database. By implementing the architecture in middleware, independent of the database, it is possible to adapt it for use with any existing database. Thus the flexibility and breadth of application is increased.

Any of the preferred features may be combined, and combined with any aspect of the invention, as would be apparent to a person skilled in the art.

To show, by way of example, how to put the invention into practice, embodiments will now be described in more detail, with reference to the accompanying drawings.

### Brief Description Of The Drawings

Figure 1 shows a prior art arrangement;
Figure 2 shows an overview of a network on which an embodiment of the invention can be used;
Figure 3 shows features of a client node for use in the network of figure 2;
Figure 4 shows a schematic overview of a distributed persistent storage (DPS) architecture according to an embodiment of the invention;
Figure 5 shows another schematic overview of static features of a distributed persistent storage architecture including an example of a client application that uses DPS;
Figure 6 shows features of the service sublayer of figure 5;
Figure 7 shows a schematic overview of components of the DPS middleware of figure 3;
Figure 8 shows an example of run time actions of the application and the DPS middleware of figures 3 to 7;
Figure 9 shows the class hierarchy of a client application (Personal Phone List) that uses DPS;
Figure 10 shows in more detail the actions of the remote node of figure 9;
Figure 11 shows in more detail the actions of the connection monitor of a remote node;
Figure 12 shows a flowchart for a DPS lookup object method;
Figure 13 shows a flowchart for a DPS change object method;
Figure 14 shows a flowchart for a DPS local change object method;
Figure 15 shows a flowchart for a DPS create object method;
Figure 16 shows a flowchart for a DPS local create object method;
Figure 17 shows a flowchart for a DPS local delete object method; and
Figure 18 shows a flowchart for a DPS delete all object method.

### Detailed Description

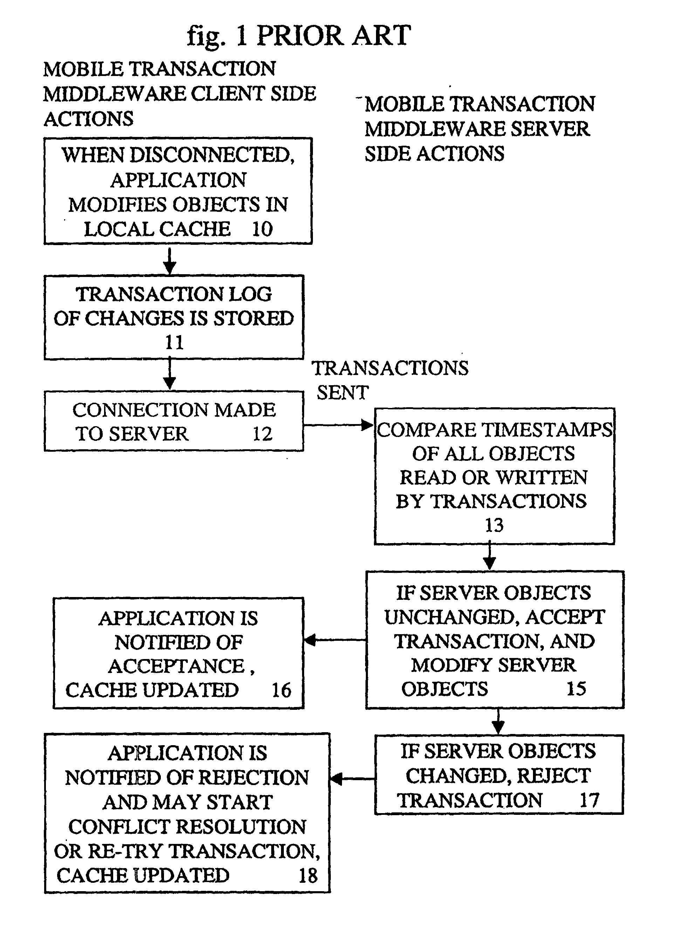

### Figure 1 - prior art transaction based client server method

Figure 1 shows an illustration of the prior art "GoldRush" method in which client actions are illustrated on the left, and server actions on the right. At 10, when the mobile clients are disconnected from the server, an application on the client modifies objects in the local cache. A transaction log is kept, to record all transactions, at 11. When a connection is made to the server, at 12, the transactions are replayed back to the server. As objects in the server come to be modified by the transactions, or read, timestamps of the client and server copies are compared, at step 13, to see if the server copy had been modified in the meantime. At 15 the transaction is accepted if the server objects are unchanged, and if appropriate, the server copies are changed. Then at 16, the client is notified of acceptance, and the client side cache updated accordingly.

Otherwise, if the transaction is rejected, as at 17, the application is notified of the rejection, and may start conflict resolution procedures, at 18.

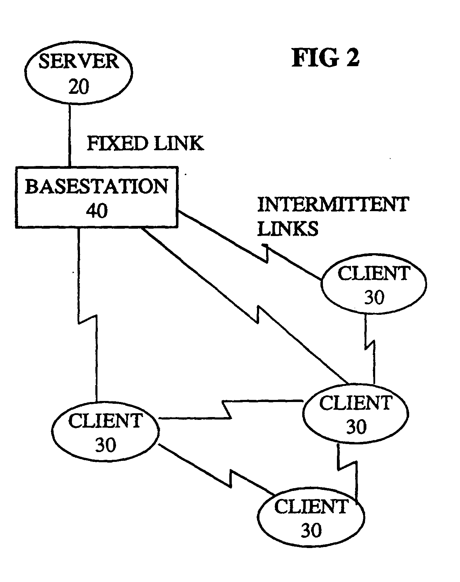

### Figure 2 - overview of a network

Figure 2 shows in schematic form a network to which the present invention can be applied. Whereas a prior art client server based system would always need direct connections from the server to every client, for this embodiment of the present invention, clients may contact each other without going through the server. As can be seen, a server 20 is provided with links to client nodes using both fixed links and intermittent links such as wireless links. A base station 40 couples the wireless links to the server. Numerous client nodes 30 can be linked to the server, only four are shown for the sake of clarity. The client nodes could take the form of mobile telephones, or laptop computers linked by mobile telephones. Client nodes may be in contact with each other, according to the peer to peer model proposed for data replication and resynchronisation purposes at least. For other purposes, the client server model may follow more traditional lines.

An example where client nodes may be intermittently interconnected, is where a palmtop computer has a wireless link to a laptop computer. The palmtop can access objects stored in the laptop, and may synchronise its data with that in the laptop. The laptop may have a wireless connection to other laptops, and ultimately to a remote server.

The server, although shown as a single entity, can also be distributed. Based on this peer-to-peer model, "n" tier data synchronization and replication can be constructed.

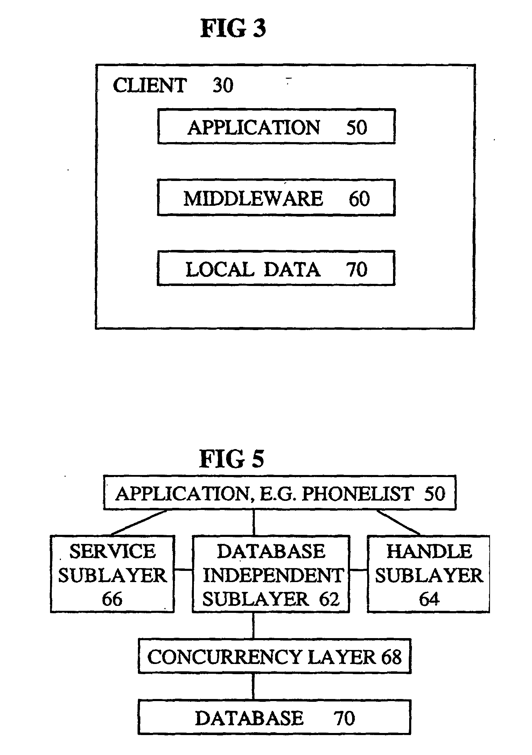

### Figure 3 - client node overview

The client nodes 30 shown in figure 2 can be seen to have three main layers of software, as shown in figure 3. Local data 70 may be stored in the form of a database, though other data structures could be envisaged. Application software 50 makes use of the data via middleware 60. An example of an application might be a web browser. Another example which will be discussed below is an application for accessing and maintaining information such as lists of telephone numbers, or addresses. Many other applications can be envisaged. The middleware will be referred to as a Distributed Persistent Storage mechanism. How it functions and interacts with other parts will be discussed in more detail below.

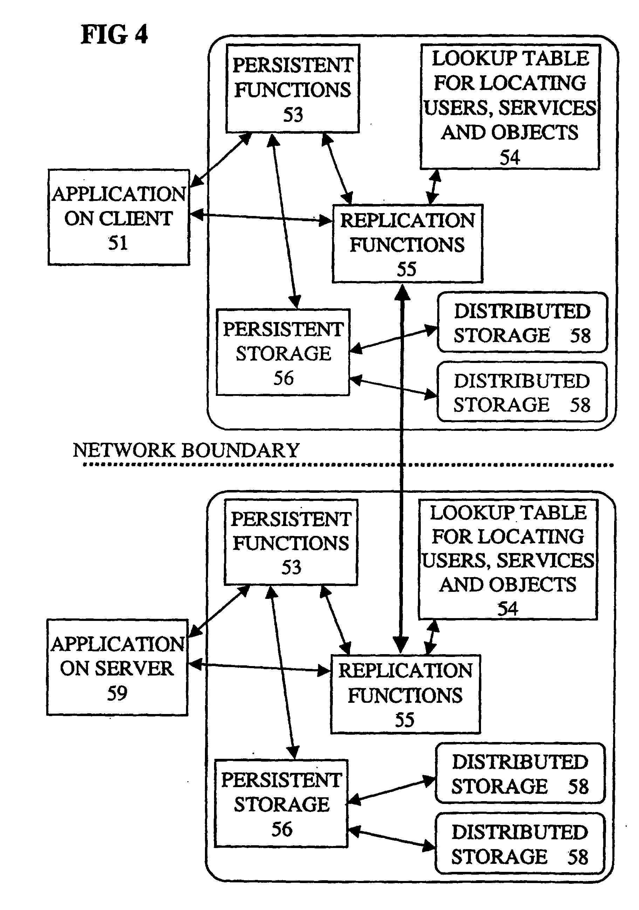

### Figure 4 - Conceptual Overview of a Distributed Persistent Storage (DPS) Architecture

The conceptual model of figure 4 shows a "simplified view " of the functions of the Distributed Persistent Storage (DPS) system serving applications 51,59 on nodes on both a client side and a server side. The network boundary is shown to indicate that the client side is mobile and remote from the fixed parts of the network. Reflecting the peer to peer nature of the DPS, the functions of the DPS are essentially the same on the server node and the client node.

The client application 51 should view the persistent storage 56 as a single entity though the database is actually stored across multiple servers 58. In the example described below, the client/server model is chosen on the server side, that is the server or home location always stores the master copy of the Clients or (when the server is distributed also), visitor locations, store a replica of at least part of the database for greater local accessibility. The application can send requests to the persistent functions 53 and the replication functions 55. Each can return data to the application. The persistent functions are able to handle basic operations such as lookup, create, delete, change, and so on, on the data stored in a persistent form. Such functions may use the replication functions, which enable the data to be stored in several places, to provide the advantages discussed above. The replication functions serve to maintain the various copies of data consistent. They make use of a look up table 54 for naming services. This enables users, services, and objects (if object oriented programs and data are used ), to be mapped to host and port identifiers.

Hosts are defined as machines identified by an IP address or name of the machine, and can have multiple instances of DPS running as servers or clients or peers. Since each DPS server or client or peer uses a TCP port for data synchronization, a host may have as many DPS peers as the number of free TCP ports.

As illustrated, the data synchronisation takes place by communication between the replication functions 55 of neighbouring nodes. As will be described in more detail below, such synchronisation sessions are initiated from one side, and there may be two independent sessions

### Functional Design Considerations of one Embodiment of the Invention

a) Small Footprint - Code supporting the Data replication mechanism must have a small memory footprint both in persistently stored and executing (RAM) forms. This will minimize its impact on the network server ROM and/or RAM requirements which are consistently being challenged due to the every increasing size of software.
b) Thread-Safe - The mechanism must be thread-safe and therefore support Java threads. This is since many Java applets may be multithreaded and each thread may make requests of the Data replication mechanism at the same time.
c) Minimal Storage Overhead - Must be designed to have minimal fragmentation overhead of per "replicated data block". Further, the storage overhead associated with the indexing scheme used to query for replicated data items must be kept to a minimum.
d) Versioning of Data- Must support the ability to distinguish the version of a given data item, possibly based on timestamp or version number. In other word, a specific number of versions of replicated data items must be stored and kept track of by this mechanism.
e) Locking Capabilities on Shared Data - It is critical in practice to provide shared or exclusive locks on a data item which may be accessible by concurrent processes. This mechanism prevents data corruption, and race conditions among concurrent processes. More complex types of locks may be required to optimize the locking algorithm, for example, shared intended exclusive locks. Since the data replication algorithm can request a resource while it holds a set of locks on other resources, deadlock situation can occur among data synchronization processes. Thus, data replication mechanism must prevent deadlock situations.
f) Data Corruption Handling or Fault Tolerance - Must provide the ability to back out corrupted data and their associated information. Data corruptions may be caused by system reset, power failure, network connection time-outs. This capability relies heavily on the ability to support versioning.
g) High Availability and Consistency of Replicated Data - The purpose of data replication is to provide highly available data while preserving data consistency to distributed clients. The goal of maintaining data consistency conflicts with providing highly available data. Consistency allows access to consistent replicas only; availability improves if any replicas can be accessed. In reality, the cost of maintaining consistency of replicated data is proportional to the availability of the data (e.g. cost = square(number of instances of each replicated data)). Finally, this capability relies heavily on the ability to support versioning, and locking.
h) Internal Exception Handling - The Data replication mechanism has its own internal states while it is active. It must handle its exception cleanly so data corruption can be avoided. This capability ties in with the corruption handling function.
i) Scalability - The Data replication mechanism must not be restricted by the size of network, such as number of clients. A designer must be able to add/remove/replace any desirable or optional functionalities to/from the system.
j) Transparency - Although the administrator may want to change the replication strategy, the users of this mechanism need not be aware of how the data are being stored and accessed across the network. From the user point of view, a data item exists only as a single instance of a network entity in any given context. Therefore, the application interface must be designed as "transparent" as possible.
k) Strongly Consistent Read Access - Whenever a client requests to read a data item, the data item must be the most recent version returned from the persistent storage. While a mobile client is reading a locally-stored replicated data, other mobile clients will not be able to read/update the data item until the read operation is complete. This implies if the client reads a data item, all instance of the data item must be exclusively locked until the read operation is complete. It severely reduce the availability of the data item, thus unsuitable to highly mobile system. However, this functionality must still be available to the clients if they decide it is important. This mechanism relies heavily on the requirements for versioning, locking, and high availability of data.
l) Weakly Consistent Read Access - If a client requests to read a data item, the data item may be an older version of the replicated data item. While a mobile client is reading a locally-stored replicated data, other mobile clients may read/update the other replicas of the data item. This increases the read availability of the data item. This is suitable to highly mobile system because most data accesses in a distributed system are read access, thus data availability greatly affects the network performance. Since instantaneous read consistency is not guaranteed in this model, the clients must use this functionality at their discretion. Although the data is not instantaneously consistent during the access, all replicas must eventually become consistent. This mechanism relies heavily on the requirements for versioning, locking, and high availability of data.
m) Strongly Consistent Write Access - Whenever a client requests to write a data item back to the persistent storage, the data item will become the most recent version in the persistent storage. While a mobile client is updating a locally-stored replicated data, other mobile clients will not be able to read/update the data item until the write operation is complete. This implies if the client reads a data item, all instance of the data item must be exclusively locked until the write operation is complete. It severely reduce the availability of the data item, thus unsuitable to highly mobile system. However, this functionality must still be available to the clients if they decide it is important. This mechanism relies heavily on the requirements for versioning, locking, high availability of data, and weakly consistent read access.
n) Universal Data Replication - A network may be partitioned into different data replication subsystems. Replicas may be stored across these subsystems on the network. These subsystems may not be the same version, but the newer versions of the data replication subsystems must be backward compatible with the older versions. Also, data must be replicable and accessible on any node of these subsystems.
o) Referential Integrity - All references to a replicated data item or object must be consistent. That is, if a new instance of the replicated data item is created in the system, updates to all replicas must be consistent with the new replica. If a replica is deleted from the system, references to the obsolete replica must be removed from the system as well.

Other functionality to be considered includes:
p) Simple API - The persistent storage mechanism should be easy for Java applet programmers to understand and use.
q) Fast Read/Write Capability - Should provide small read/write latency to support the design of applets that deal with persistent storage and perform at optimal speeds.
r) Minimal Persistent Storage Overhead - Should be designed to have minimal fragmentation overhead of persistent storage. Further, the persistent storage overhead associated with the indexing scheme used to query for stored data items must be kept to a minimum.
s) Compressed Storage Option - Should provide support to be configured to store its data in compress form transparent to the user. This will optimize the persistent storage usage (possibly at the expense of reduced access speeds).
t) Efficient Retrieval - Should provide an efficient way to locate a given data item and prepare it for reading and/or writing.
u) Synchronous/Asynchronous/Future Return Of The Result - If a synchronous request for a valid operation of data replication (e.g. read/write) is made, the interface call will not return (with/without return code) until the execution of the operation is complete. If an asynchronous request is made, the call will return as long as it is in valid context. If a future (future asynchronous) request is made, the call will return as long as it is in valid context, and the return code is available when the execution is complete.
v) Intelligence - The Data replication mechanism may have the intelligence (either static, dynamic, or adaptive) to optimize for storage, load balancing, cost. This could be achieved by setting storage limits, forcing early reconnection, choosing to delay reconnection to busier nodes etc. Static intelligence is added during the code compilation of Data Replication's system. Dynamic intelligence may be added in by the administrator at real-time, whereas adaptive intelligence has the ability to change the behavior of the system by learning the facts gathered at real-time.

### The Client-side Persistent Data Storage Mechanism

A file system is one possible approach. However, it is not preferred because it is not suited to storing objects, and because overhead is imposed due to fragmentation of the storage medium, and directory structures.

A database approach is better than the file system's approach because a database is a persistent storage. In addition to data consistency, database also offers a variety of functionalities: Query, Maintenance, Replication, and Fault Tolerance. For these reasons, database is a better choice for long term. However, if the client needs a ultra thin persistent storage, the file system solution may be a viable alternative. Given a choice between a traditional relational database, such as Oracle or DB2, and an OODB, the OODB is preferred, because the mapping of JAVA objects to OODB is very simple and elegant. There is no need to write extra code to map objects onto a relational database table. Also, object locking is a common capability of an OODB. An example of an OODBM for JAVA is ObjectStore 5.0 with JAVA interface.

### Basic DPS Functionality

A basic embodiment of the Distributed Persistent Storage (DPS) for at least one client node and a server node could include the following functionalities:
a) Persistent Storage of Objects between servers of different geographical locations.
b) On the server side, if it is distributed, as well as the client side, there is a concept of home versus visitor databases. A master copy of the database is stored at the home server and the slave copies are stored at the visitor servers.
c) The master copy is cached locally to the visitor nodes when the mobile client tries to access the database.
d) Changes made at a master or visitor node must be propagated back to replicated nodes.
e) The movement of an user is tracked in a user location registry which is stored persistently in the database.
f) A mobile client can be disconnected from the network for a long period of time. It can access the database through the home or the visitor node, usually wherever is closest geographically. A local copy of the database is cached on the mobile client and may be modified while the client is disconnected from the network.
g) Data resynchronization of the mobile clients is performed upon reconnection. Since a mobile client is usually the one that initiates the connection to the server, data resynchronization should also be initiated or triggered by the client as well. On the other hand, the server may also initiate the connection to its clients and data synchronization can also be initiated or triggered by the server. This is analogous to the push-pull technology available on known client/server frameworks, but is much more scalable because it is based on a distributed model.
   The conflict resolution policy for data resynchronization is to replace the older version of the data with the newer version based on its modified time. This policy is chosen for simplicity, more complex, policies can be envisaged, which may be more appropriate, according to the needs of the applications. If the versions are the same but the replicas are different, a notification would be sent to the two synchronizing nodes and no change would be made at either end. When the client is disconnected from the network, modified objects are tagged dirty and would be forced to resynchronize with the server upon reconnection.
h) The "dirty" objects on the mobile client have the highest priority in resynchronization.

To demonstrate the distributed aspects of persistent storage, the disconnected client's implementation will have a finer replication granularity: Different root objects in a database may have a different geographically replication strategy.

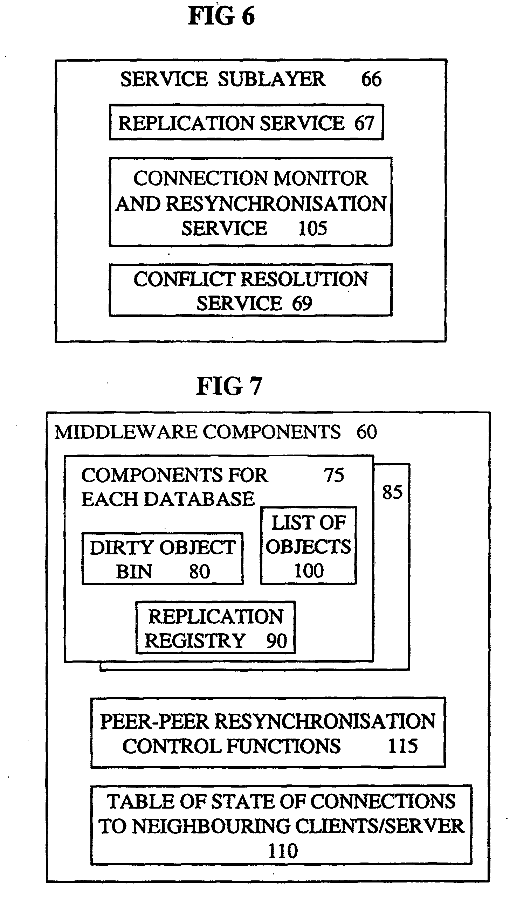

### Figures 5, 6, and 7 - Static Model of the DPS

DPS middleware consists of three layers below the application: Abstraction, Concurrency, and Database. The Abstraction Layer 62,64,66 serves to provide abstraction to the persistent storage's structure, customized services, and software hooks to enhance the availability of the third party database capabilities to the application. It comprises a service sublayer 66, a database independent sublayer 62, and a handle sublayer 64. The Concurrency Layer 68 is intended to provide customized database concurrency control to the application, such as multi-thread access to the database, joined transaction among multi-reader threads and single writer thread. The Database Layer 70 is simply a third-party database. The database may be an object-oriented database (OODB) or relational database (RDB). The layering is intended to isolate the application from the underlying persistent storage structure. In the example of the static model shown in the figure, it may be represented by Root_PS. It contains the code to permit multi-thread access to a single database. The strategy is to serialize individual transaction of each thread (Multiple Readers or a single Writer) into a single transaction. Although it does not provide the best data access concurrency to the threads, it is a good solution to overcome a deficiency of OODBs such as ObjectStore.

The Service Sublayer is made up of different types of persistent storage services. Some basic services supported are: Replication 67, Connection Monitor and Resynchronisation 105, and Conflict Resolution 69. The Replication service provides data or object replication across the distributed persistent storage system. The Conflict Resolution service is provided to resolve inconsistent updates among disconnected clients. A basic strategy for this is to replace the older version of an object with the newer version locally in the resynchronisation phase, which is adequate for thin clients. More advanced conflict resolution techniques are well known, and could be implemented as desired. The Connection Monitor Service provides to both the persistent storage and the application a way to monitor the state of connections to other nodes, and perform resynchronisation when appropriate. It could be implemented as a thread or as a method called by others. The service is assumed to have access to the state of the connection on the host machine, thus can provide DPS or the application a way to control data access based on the state of the connection between the hosts.

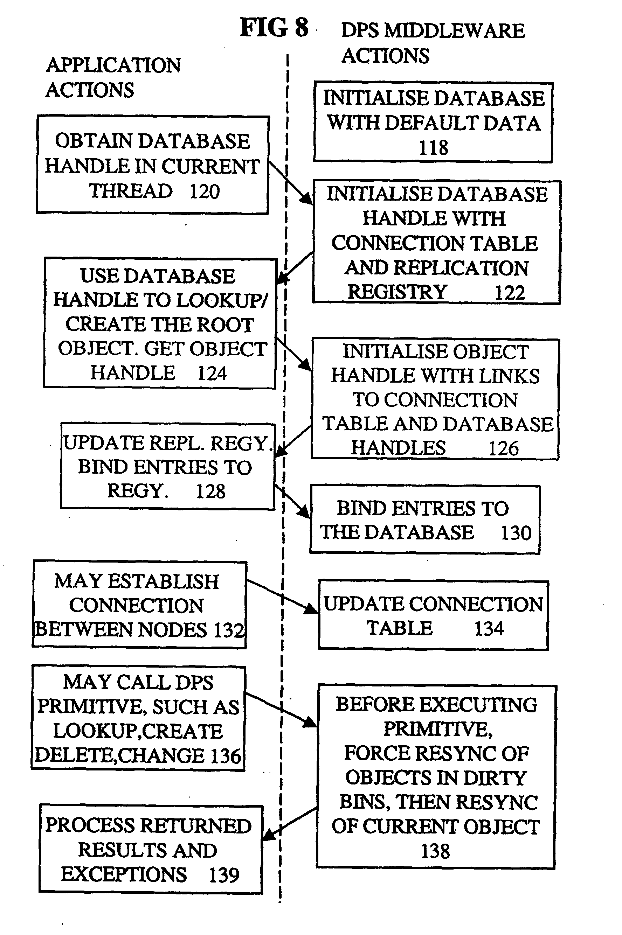

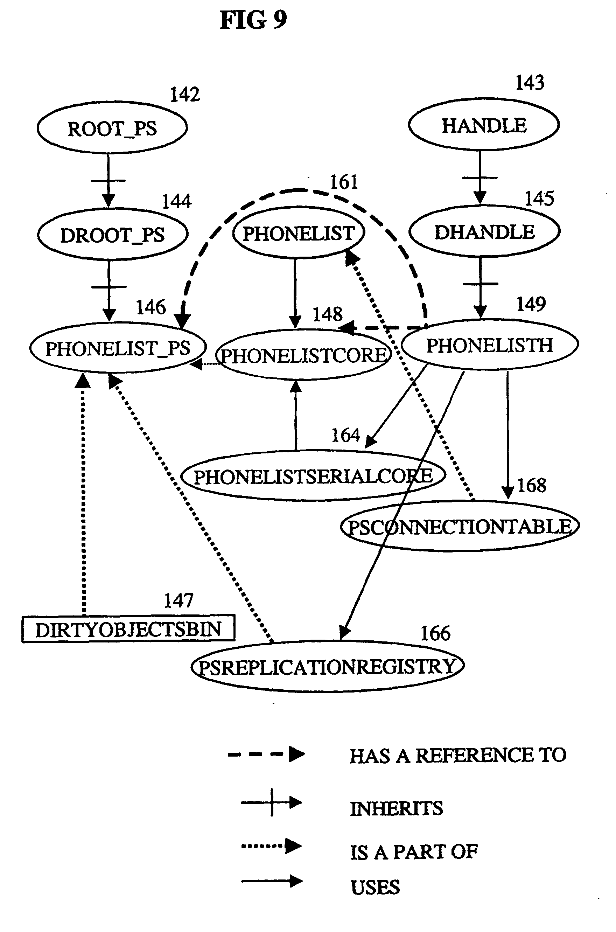

The Database Independent Sublayer is intended to hide the actual database structure from the application. From the application's point of view, a database that it creates is a single logical entity. It should be accessible the same way regardless the geographical location of the mobile clients. In the static model, for an example of a telephone listing application, this sublayer could be represented by PhoneList_PS, or UserProfile_PS (or <application object>_PS), as is shown and will be discussed below with reference to figure 9. It provides a handle to the actual distributed database. The functions of these and other parts will be described in more detail below with reference to the dynamic model shown in figure 8.

The Handle Sublayer provides (persistent aware) handles to all persistent capable objects in the database.

If the instances of a class can operate on persistent objects but cannot themselves be stored in DPS database then the class is persistence-aware. If you can store an object in a DPS database then the object is persistence-capable. If you can store the instances of a class in a database then the class is persistence-capable. It hides the actual data access mechanism to the object from the application. This is necessary because hooks can be added in to permit transparent access to persistent storage services, such as, object replication. If the "." operator in JAVA can be overloaded, then this sublayer can made more transparent than it is now. An example of a handle object is: PhoneListH, as will be discussed below with reference to figure 9.

Another view of some of the components of the DPS middleware for a client node is shown in figure 7. Some components 75 are duplicated to provide one for each database, and there may be several databases, used by different applications, or by the same application. A replication registry 90 keeps a record of what objects in its database are replicated on neighbouring nodes, with the identity of those nodes.

The replication registry could be implemented as follows. For each object two mappings are maintained. A first mapping gives a direct lookup of the storage ID of the objects based on object name, host name port ID. A second mapping is provided to give a direct lookup of the port ID of the object, based on object name, storage ID and host name. It is necessary to obtain the port ID to enable a connection to be made. It is necessary to obtain the storage ID in case there are multiple replicas of the same object on the same host, e.g. if redundancy is provided. Providing two mappings enables faster lookup to be achieved.

A list of objects 100 is a list of the identity of objects cached in the database at the client node. A dirty object bin 80 is provided to record all those objects cached locally which have been altered while the node is disconnected. Maintaining such a record makes it easier to identify which objects need resynchronisation when a connection is made. It can be implemented as a First In First Out ( FIFO) mechanism, to maintain the order of entries. One altered object can cause multiple entries in the bin, so that there is an entry for each replication of the object on different neighbouring nodes. This can be achieved using the information in the replication registry. Then, as resynchronisation takes place with each of the neighbouring nodes, the corresponding entry in the bin can be removed while leaving the entries relating to nodes not yet connected.

The control functions for carrying out the resynchronisation following the peer to peer model, are shown as 115. They make use of the components 75 described above, and corresponding components 85 for another database. A table 110 of the state of connections to neighbouring nodes is also shown.

### Figure 8 - Dynamic Model

The dynamic model shown in figure 8 illustrates the run-time behaviors of DPS and an application. The actions of the application are illustrated on the left side, and those of the DPS middleware, distributed over the client nodes and the server, are illustrated on the right side. The actions can be separated into three parts, initialisation, connection changes, and executing operations on the data.

The invocation of an object persistent primitive initiates message exchanges between two replicated nodes. This exchange may be viewed as a "virtual object persistent session" between two persistent object databases. To ensure the session behaves appropriately, the application must configure the replication registry with accurate replication entry information.

Since mobile clients do not have stable connection, DPS is designed such that the mobile clients can trigger the activation of its DPS session. In practice, it would be the mobile client (wireless phone) that initiates (e.g. roaming) service requests. Thus, this architecture is consistent with the behaviors of real-world mobile clients. However, the server may trigger the activation of its DPS session to its clients as well. This way, this invention offers maximum flexibility to the mobile system designer.

To maintain consistency of replicated objects, the synchronization algorithm relies on its interaction with the connection table and the replication registry.

The initialisation actions will be described first. Following database initialisation at 118, the application obtains a database handle (PhoneList_PS, in the example discussed below with reference to figure 9) in the current thread at 120. The DPS initialises the database handle with links to the connection table and replication registry at 122. The application then uses the database handle to lookup or create the root object. The database handle returns the corresponding object handle to the application. The application must use the interfaces of the object handle to access the respective object. These handles contain all the necessary knowledge to interact with the core DPS software. The DPS initialises the object handle with links to the database and connection table handles at 126, ( as illustrated in figure 9). The application updates the replication registry and binds all replication entries of replicated objects to the registry at 128. Finally, at 130, the DPS binds entries to the database.

According to the needs of the application, or applications, they may initiate connections to other nodes, as shown at 132. The DPS reacts by updating the connection table at 134.

When an application wants to carry out an operation on the data stored at the server, or cached locally, it will call a DPS primitive, such as create, change, lookup, cache, delete, and so on. This is shown at 136. This causes the DPS to determine at 138 if it is a local primitive or API (Application Programming Interface), and if so, begin execution. If it is a remote primitive then a remote method invocation mechanism would be used to enable the operation to be executed remotely, e.g. on the server. As will be described in more detail below, some operations will include a resynchronisation of the cached data. Where this takes place, the DPS will check the dirty bin, and force resynchronisation of dirty objects, where there is a connection to a neighbour having a replication of such objects. When it has been through the dirty bin, the DPS will force synchronisation of objects currently being used, but not yet having an entry in the dirty bin. After any necessary resynchronisation, at 139, the application processes the returned results and any exceptions.

### Figure 9 - Class Hierarchy

An object oriented class hierarchy for implementing one embodiment of the invention is shown in figure 9. The classes or objects are explained as follows:

Root_PS, 142, is a persistent aware object that provides the Database-Independent Abstraction sublayer to the application. It maps directly to a database and also contains the concurrency layer functionality that permits multiple threads access to the database " concurrently in the user's point of view".

DRoot_PS, 144, extends Root_PS capabilities; it offers distributed persistent storage to the application. Each database stores a copy of its replication registry which is crucial in determining the replication strategy at the current node. PhoneList_PS, 146, is the application-specific DPS's handle for a phone list application.

PhoneListCore, 148, is a persistent capable class. It contains the non-UI (non-UI means it does not contain any User Interface components of the personal phone list.) component of the core of the PhoneList, 161, (the UI version of a phone list). PhoneListCore is the root object class for PhoneList_PS. PhoneListSerialCore, 164, is an object wrapper for PhoneListCore. This wrapper allows PhoneListCore to be serialized (e.g. for DPS's RMI). Since present OODBs such as ObjectStore's objects are not serializable, this class is created to work around this limitation.

PSReplicationRegistry,166 is the replication registry for DRoot_PS. It contains these members: object, host name, port number, location id. A replication node is an unique <host name, port number> pair. Each node has a replica of the object, therefore it provides maximal flexibility in object replication. Currently, the root object's key (which is a String) is mapped onto the registry instead of the object itself. In the case of the phoneList application, the root object is a personalized telephone list mapped to unique key string which is the owner of the telephone list.

PSConnectionTable, 168, is created to store the connection state of nodes with their neighbours. The endpoints of a connection are the host names of the two DPS nodes. This table is updated by the Connection Monitor or applications which know the connection state of the local host. The state may be connected or non-connected. If node B does not have an entry in the connection table of node A, this means B and A are not neighboring nodes. With the application updating the state of its connection, the system can operate in the real world of wireless mobile clients. The connection table is not persistent aware or capable because connections between mobile clients or servers are run-time events.

Handle, 143, is the class that provides the Handle Sublayer abstraction to the application. DHandle, 145, extends Handle to provide the distributed persistency to the application. To provide efficient computation, DHandle has an implicit reference (not shown) to its database handle, since PhoneListH inherits from Dhandle, and PhoneList_PS inherits from DRoot_PS, so database APIs can be accessed faster. In the case of a disconnected mobile client, its distributed persistent storage framework is built on top of the server framework. DRoot_PS, DHandle are provided to provide true distributed object storage capability. PhoneListH, 149, is an example of a handle object, for the phonelist application. It has references to PhoneListCore, and to PhoneList_PS. PhoneListH contains the necessary personal phone list interfaces for the user, such as add/delete/change/scan/lookup a phone entry, the implementations of the interfaces hide its interaction with DPS from the user.

DirtyObjectsBin, 147, is a persistent capable Hashtable that stores all the modified objects which need to be resynchronized with other replicated nodes. If an object is to be hashed to a hashtable, a unique hash code (e.g. long integer) will be assigned based on the value of the object. The hashcode serves as an index to lookup the object. The hashtable consists of a finite set of hash buckets which may be mapped to more than one hash code. The mapping is computed based on a pre-set hash function. Therefore, each hash bucket may contain multiple hash entry which store each unique hashed object. Each database has one dirtyObjectsBin. During a reconnection, objects in the dirtyObjectsBin are forced to be resynchronized first. When an object finishes its resynchronization, it is removed from the hashtable.

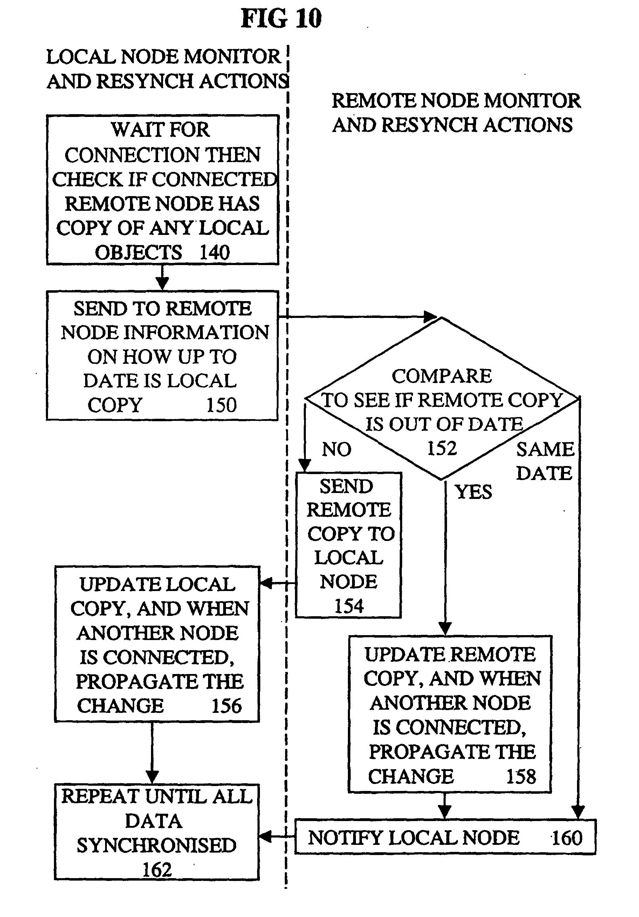

### Figure 10 - Resychronisation Actions Between Nodes

The principal steps in one embodiment of the resynchronisation process are shown in figure 10, for any two nodes, which will for convenience be referred to as a local node and a remote node. The steps performed at the local node by the monitoring and resynchronisation functions are shown at the left side, and those for the remote node are shown at the right side. At 140, the local node awaits a connection. Once a connection is detected, the remote node checks its replication registry, to see if the connected node has a copy of any of the objects cached at the local node. If so, at 150, the local node sends a note of how up to date are the local copies of one or more such objects, to the remote node. Preferably this is carried out only for those objects the local node has changed. The remote node can then compare this information with corresponding information for its copies of these objects, at 152.

If the remote node finds that the remote copy is more up to date, it will send a copy ( or details of the differences ) to the local node, at 154, to enable it to update its copy, at 156. The local node can then propagate the change to other nodes in a similar fashion. Also, at this point, conflict resolution in the local node can be commenced if necessary. This may be facilitated if the local node has been keeping a record of transactions using the objects which have been altered. Preferably also the record covers objects which have been accessed but not changed, in case they had been changed by another node, and were out of date when accessed.

If the remote node finds the local copy is more up to date, it will update its own copy at 158, by requesting the necessary information from the local node. If the remote copy and local copy are of the same date or version, the local node is notified at 160. The process is repeated at 162 until all the local data is synchronised. The same sort of process can be carried out for all the objects the remote node has changed. This could be carried out as part of the above process, by having the remote node advise the local node which objects have been changed at the remote node. However, it is preferably carried out as a parallel independent process initiated by the remote node, and following exactly the same steps as above, but with the remote and local nodes transposed. This adheres closer to the peer to peer principle, which makes for improved scalability, and easier implementation, if all nodes are the same and need a minimum of initial adaptation.

The information on how up to date the data is can be a version number, or a time stamp, for example. For object oriented data, whenever an object's attributes, or its attributing objects are changed, it's version or timestamp should be changed. Various ways can be envisaged, to achieve this. If the object subscribes to all its attributing objects, whenever a change in those attributing objects occurs, the objects version number can be incremented, or it's timestamp updated. Alternatively, a global version control manager can be implemented, which maintains a tree-like call graph of all the objects. A change in one object causes the manager to trigger updates in all parent objects caught by an upward traverse up the tree-like call graph.

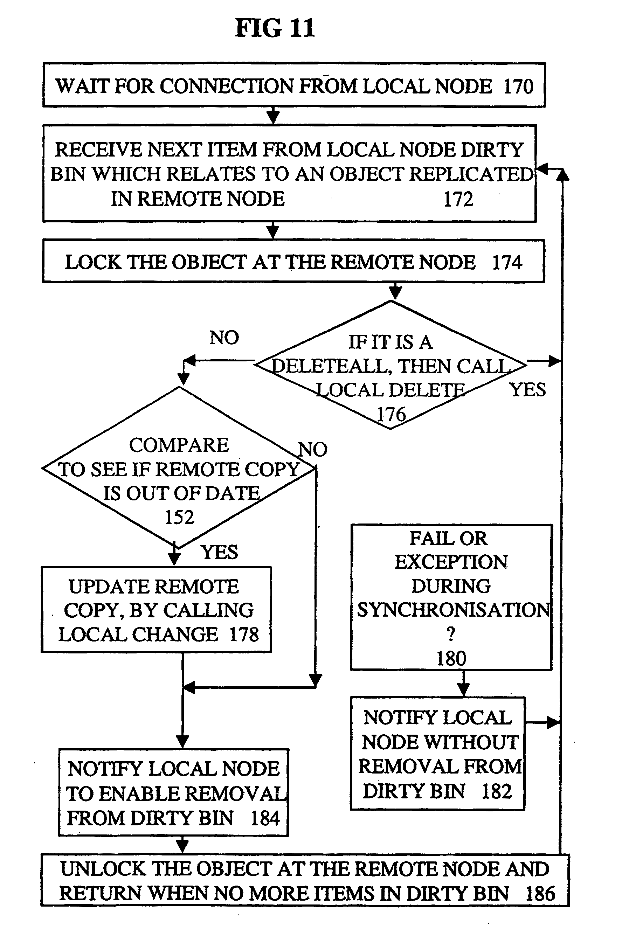

### Figure 11 - Resynchronisation Actions at the Remote Node

A more detailed flowchart of the remote node actions shown in figure 10, is shown in figure 11. After waiting for a connection at 170, an item from the local node dirty bin is received at 172. The remote node locks the copy of the relevant object at the remote node, at 174. At 176, it is determined if the item is a delete all operation. If so, then a local delete method is called, to delete the copy in the remote node, then the next item received from the local node dirty bin is examined. If it is found that the item is not a delete all operation, then at 152 the version or timestamp information is compared to see if the remote node copy is out of date. If so, at 178, the copy in the remote node is updated, by calling a local change method. More details of this method will be explained below. Otherwise, this step is bypassed. Any fail or exception occurrences are detected at 180, and notified to the local node at 182, and the local node dirty bin entry is left uncleared. At 184, successful updating is notified to the local node, and at 186, the relevant object is unlocked in the remote node.

The principal steps involved when performing operations on an object which may be cached locally, and need synchronising, will now be described. These methods may be called by applications, or, as shown above, some may be called as part of DPS functions, such as resynchronisation. Generally, an application would not be able to use the local operations, only the global ones, otherwise the resynchronisation could be overridden by applications, and consistency could not be guaranteed.

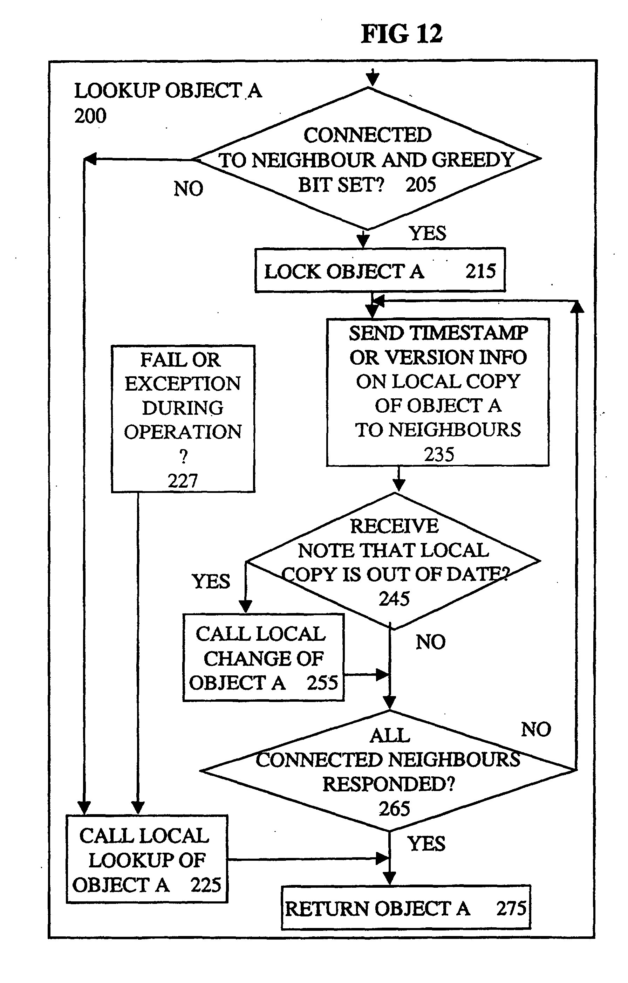

### Figure 12 - Object Look up Flowchart

A method 200 for a lookup operation on object A begins with the step 205 of checking that there is a connection to the relevant node, e.g. the server, and checking if a greedy bit is set. This bit indicates whether it is desired to look beyond a locally cached version of the object, to find a more up to date copy elsewhere. It may be set by the user, by an application, or by other parts of the DPS, e.g. to adapt the DPS dynamically to changing conditions, e.g. network congestion. If the conditions at 205 are not satisfied, a local lookup method is called at 225. Otherwise, the local copy of the object A is locked at 215. A timestamp or version indication is sent to a connected neighbouring node at 235, and responses are processed at 245. If the local copy is out of date, a local change object method is called at 255. Otherwise this step is bypassed. At 265, it is determined if all connected neighbours have responded. If not, the process may be repeated until all have responded. Finding no more up to date copies will result in the local copy being accessed. Exceptions or fails during the operation will also result as shown at step 227, in the local copy being accessed. Otherwise, the most up to date copy is returned at 275.

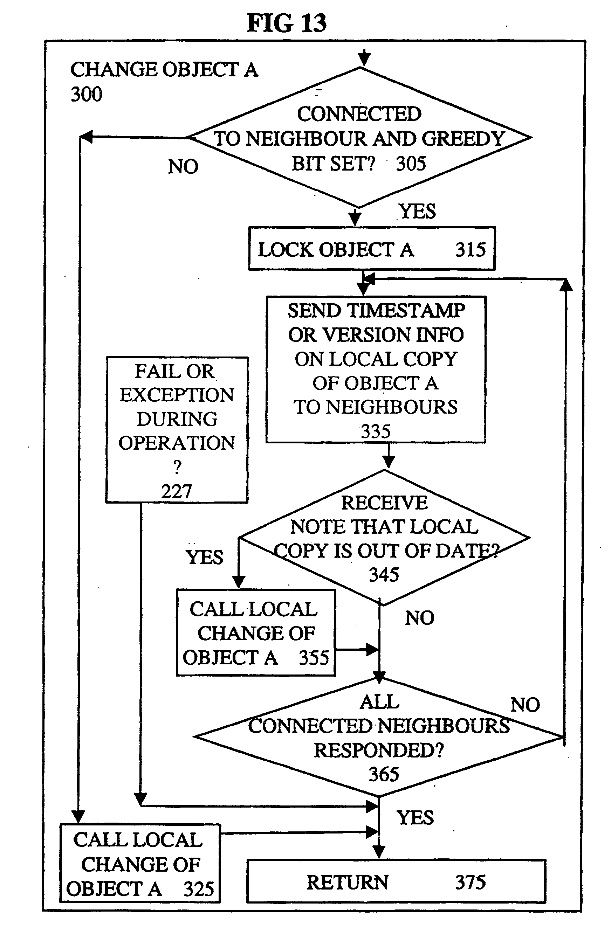

### Figure 13 - Change Object Flowchart

A method 300 for a change operation on object A is shown in figure 13, and begins in a similar way as for the lookup operation, with a checking step 305, and a locking step 315. If the conditions at 305 are not satisfied, a local change method is called at 325. There is also a corresponding step 335 of sending a timestamp to a neighbouring node, and responses are processed at 345. If the local copy is out of date, a local change object method is called at 355. Otherwise this step is bypassed. At 365, it is determined if all connected neighbours have responded. If not, the process may be repeated until all have responded. Finding no more up to date copies will result in the local copy being changed, at step 325. Exceptions or fails during the operation will also result as shown at step 227, in returning without changing the local copy. In any case, the method returns at 375.

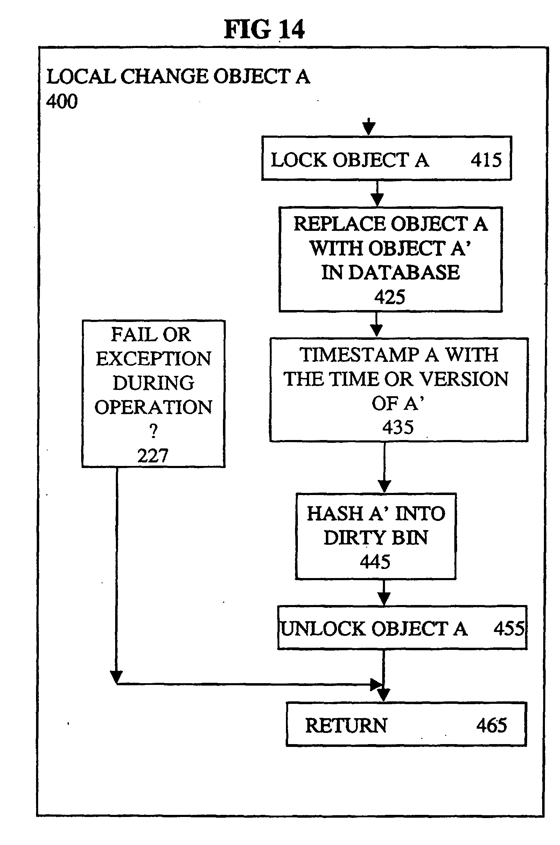

### Figure 14 - Local Change Object Flowchart

A local change object method 400 begins by locking the local copy of the object A at 415. At 425, the object is replaced in the database by object A'. The timestamp or version of object A is changed to reflect the time or version of object A', at step 435, without using the current time, or incrementing the version number beyond that of A'. At 445, A' is hashed into the dirty bin, and the lock on A is released at 455. At 465 the method returns. Exceptions or fails during the operation will result as shown at step 227, in returning without changing the local copy.

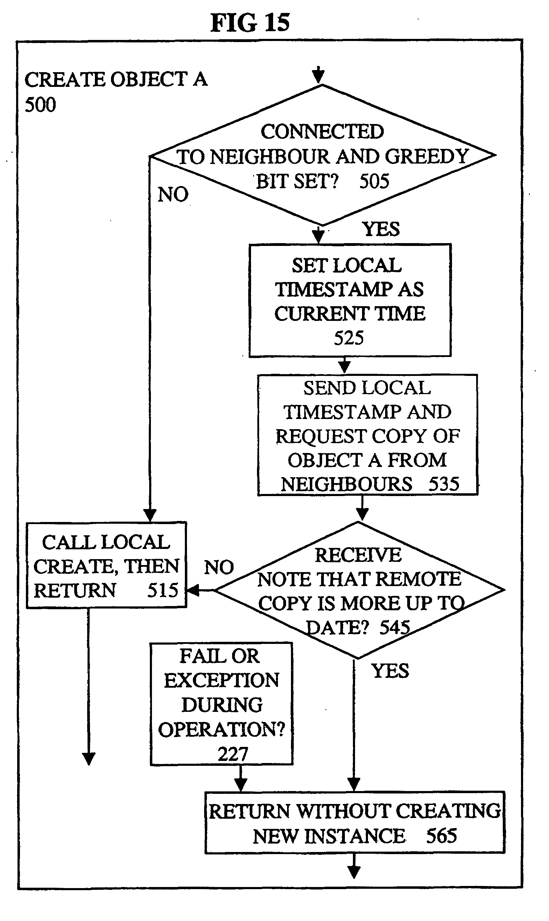

### Figure 15 - Create Object Flowchart

A create object A method 500 begins with a check step 505 similar to that in the lookup operation. If the conditions at 505 are not satisfied, a local create method is called at 515. Otherwise, a local timestamp for the new object is set at the current time at 525. There is also a corresponding step 535 of sending a timestamp to a neighbouring node, and responses are processed at 545. If another node has created the same object in the meantime, no new object is created, and the remote copy can be used. Otherwise, the local change object method is called at 515. Otherwise the method returns without creating a new instance. Exceptions or fails during the operation will also result as shown at step 227, in returning without creating a new instance.

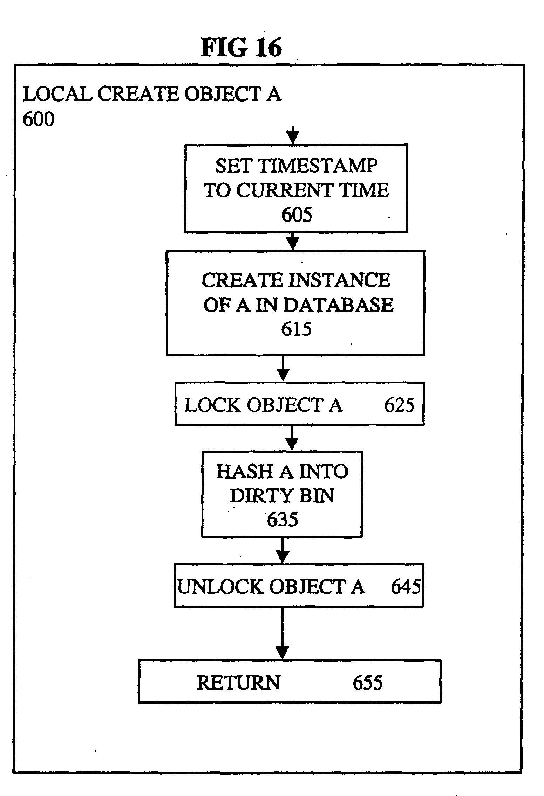

### Figure 16 - Local Create Object Flowchart

Figure 16 shows a local create object A method 600. A timestamp for the object is set first at 605, to the current time. An instance of the object A is created next in the local database, at 615. At 625, the object A is locked in the local database. It is hashed into the dirty bin at 635, unlocked at 645, and the method returns at 655.

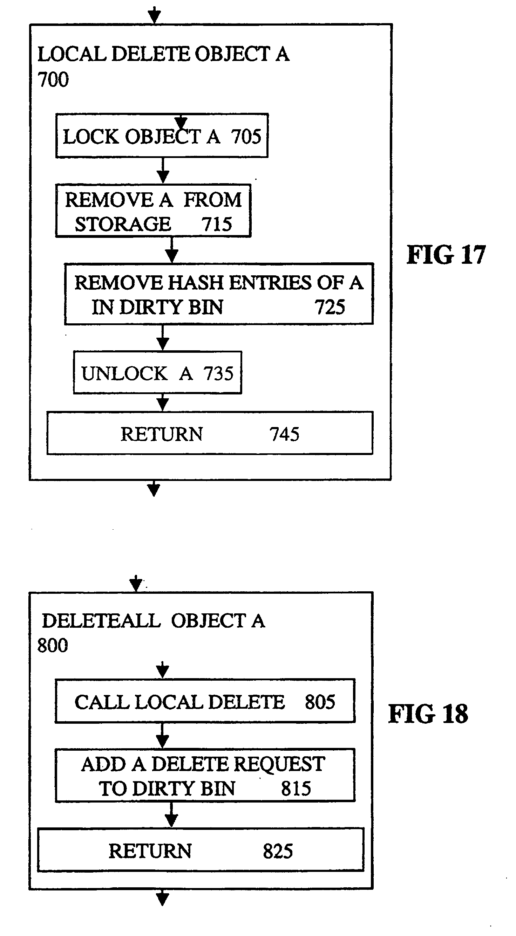

### Figure 17 - Local Delete Object Flowchart

Figure 17 shows a local delete object A method 700. An instance of the object A is created next in the local database, at 615. At 705, the object A is locked in the local database. It is removed from the database at 715. Hash entries in the dirty bin are removed at 725, the object is unlocked at 735, and the method returns at 745.

### Figure 18 - DeleteAll Object Flowchart

A deleteAll method 800 is for deleting all copies of an object. It begins with calling at 805 a local delete method. A deleteAll request is added to the dirty bin at 815, and the method returns.

### An Example of an Application

A personalized telephone list application can be used to show the distributed aspects of persistent storage whose contents may be cached locally. Since DPS is designed to be very scalable, each client may "communicate or link" to as many clients as the system resource permits. The ability of the client to drive the resynchronization demonstrates that this DPS architecture matches one advantage of known client/server push and pull technology.

The phone list can be an applet running under a viewer application. Each user can have its own phone list(s) which is identified by the user name. Phone entries may be added, deleted, modified, sorted, and queried. Connection between may be simulated by toggling the connection button. Such an application is particularly suited to the resynchronisation strategy described above, because it is handling data which needs to be consistent eventually, and for which availability is a high priority, yet instant access to the most up to date remote information is a lower priority.

The prior art centralised transaction based strategy may not be suitable for ultra thin client nodes because replaying long transaction logs back to the server from the client upon reconnection would not work well when the reconnection time is short and precious. Most of the time, a thin mobile client needs only very simple and light data resynchronization to maintain its data consistency. In this case, the distributed strategy of the invention is advantageous.

### An Example of Client Node Hardware and Connection Protocols for the Network

The client node device could be a notebook computer based around e.g. a 32 bit processor with e.g. 8MB of RAM, capable of running Java based programs, and having cellular wireless telephone hardware, for data and optionally voice communication with the public telephone network, and with internet service providers (ISP), or with servers provided by the cellular network operator, to enable data services to be provided for example. A user may try to access his/her personal phone list on the cellular phone or PCS. A notebook computer may have a docking station for the wireless phone. When the phone is docked on the notebook computer, the PCS's phone list may resynchronize its data with the personal phone list stored on the notebook. When the user returns the notebook to an area where the it can synchronize its data with the ISP through the wireless basestation, the notebook may synchronize the modified personal phone list with the phone list stored on the server which is maintained by ISP.

### Other Variations

A notification service may be added for notifying the application of results. A mix of transaction based and last modified based synchronization may be used in the framework described above. Although the application has been described with regard to object oriented data, clearly it is applicable to data stored in other ways. Although mobile wireless connected client nodes have been described, it is clear that the advantages of the invention may also be applicable to other types of device, e.g. network computers connected periodically by telephone/modem or other non wireless link, to a network. Instead of the dirty bin arrangement described above, the information on what has been changed could be ascertained by looking at all the cached objects, when needed, by comparing timestamps with a time of last resynchronisation, for example, though this may be impractical if there are many cached objects. Although a connection table is maintained, it would be conceivable to ascertain the state of connections on demand without maintaining a table.

In summary, the present invention provides a method of maintaining mutual consistency between copies of data stored at nodes in a network, the nodes comprising a server node, and a number of client nodes at remote locations, such as laptop computers linked by cellular telephone connections, the nodes being connected intermittently.

Following a reconnection between the remote client node and another of the nodes, timestamp information on objects cached at the other node, is sent to the remote client node. At the remote client node, the timestamp information is compared with corresponding information relating to the local copy, to determine if each of the cached objects is more up to date than the local copy. The cached objects are updated based on the local copy, according to the result of the comparison. This peer to peer resynchronisation means that the server need not monitor and control the process, so the system is more easily scaled up to handle more clients.

Other variations as well as those discussed above will be apparent to persons of average skill in the art and are not intended to be excluded. The scope of the claimed invention is only limited by the definitions of the claims.

## Claims

1. A method of maintaining mutual consistency between copies of data stored at nodes in a network, the nodes comprising a server node (20) and a number of client nodes (30) at remote locations, the nodes being connected intermittently, the client nodes comprising applications which make use of the data, the method comprising the steps of, at a remote one of the client nodes:
following a reconnection between the remote client node and another of the nodes, receiving from that other node information relating to a portion of the data of which there is a local copy at the other node and a remote copy at the remote client node, the information showing how up to date is the local copy;
comparing (152), at the remote client node, the received information relating to the local copy with corresponding information relating to the remote copy to determine if the remote copy is more up to date than the local copy; and,
if the remote node finds that the remote copy is more up to date, the remote node sending a copy or details of the differences to the local node (154) to enable it to update its copy (156), and,
if the remote node finds that the local copy is more up to date, the remote node updating its own copy (158),by requesting the necessary information from the local node.

2. A method as claimed in claim 1 further comprising the step of determining if the content of the remote copy is the same as the content of the local copy and initiating, at the remote node, a conflict resolution process in the event that the comparison does not reveal a difference between the information showing how up to date is the local copy and the corresponding information relating to the remote copy, but the respective contents differ.

3. A method as claimed in claim 1 or claim 2 further comprising the preliminary steps of, during a disconnection, recording which portions have been modified at the other node, wherein the information received by the remote client node relates to the portions recorded by the other node as having been modified.

4. A method as claimed in claim 3 wherein the comparison step is carried out for each of the recorded portions modified during the disconnection, before carrying out the comparison step for a portion modified subsequent to the reconnection.

5. A method as claimed in any preceding claim further comprising the step of locking the remote copy to prevent access to it during the comparison step.

6. A method as claimed in any preceding claim wherein the copies of data stored at the nodes comprise a copy of less than all the elements of a database, and wherein the data comprises object oriented data.

7. A method as claimed in any preceding claim further comprising the step of propagating the more up to date copy from the remote client node to a second other node, which also has a copy of the portion of the data, when there is a connection made with the second other node.

8. A method as claimed in any preceding claim, wherein the other node comprises the server node.

9. A method as claimed in any preceding claim further comprising the steps of:
storing in the remote client node a record of transactions involving the remote copy before the comparison step; and
remedying at least some of the transactions in the event that the local copy is determined by the comparison step to be more up to date than the remote copy.

10. A client node for use in a network of nodes, copies of data being stored at the nodes, one of the nodes comprising a server and others of the nodes being for other clients at remote locations, the nodes being connected intermittently, the client node comprising an application which makes use of the data, the client node comprising:
a connection handler for, following a reconnection between the client node and another of the nodes, receiving from the other node information relating to a portion of the data of which there is a remote copy at the client node and a local copy at the other node, the information showing how up to date is the local copy;
a comparator for comparing the received information relating to the local copy with corresponding information relating to the remote copy to determine if the local copy is more up to date than the remote copy; and
a data handler for,
if the remote node finds that the remote copy is more up to date, the remote node sending a copy or details of the differences to the local node (154) to enable it to update its copy (156), and,
if the remote node finds that the local copy is more up to date, the remote node updating its own copy (158),by requesting the necessary information from the local node.

11. A client node as claimed in claim 10 further comprising a monitor for monitoring the state of connections to neighbouring nodes.

12. A client node as claimed in claim 10 or claim 11 further comprising a registry for storing an indication of which portions of the data are being stored by nodes neighbouring the client node.

13. A client node as claimed in any one of claims 10 to 12 further comprising a processor for generating and storing an indication of whether the local copy has been changed.

## Patentansprüche

1. Verfahren zur Aufrechterhaltung einer gegenseitigen Konsistenz zwischen Kopien von Daten, die an Knoten in einem Netzwerk gespeichert sind, wobei die Knoten einen Server-Knoten (20) und eine Anzahl von Clienten-Knoten (30) an entfernt angeordneten Stellen umfassen, wobei die Knoten intermittierend miteinander verbunden werden, und die Clienten-Knoten Anwendungen aufweisen, die die Daten verwenden, wobei das Verfahren die Durchführung der folgenden Schritte an einem entfernt angeordneten der Clienten-Knoten umfasst:
nach der Wiederherstellung einer Verbindung zwischen dem entfernt angeordneten Clienten-Knoten und einem anderen der Knoten, Empfangen von Information von diesem anderen Knoten, die sich auf einen Teil der Daten bezieht, von denen eine örtliche Kopie an dem anderen Knoten und eine entfernt angeordnete Kopie an dem entfernt angeordneten Clienten-Knoten vorliegt, wobei die Information zeigt, wie aktuell die örtliche Kopie ist;
Vergleichen (152), an dem entfernt angeordneten Clienten-Knoten, der empfangenen Information, die sich auf die örtliche Kopie bezieht, mit entsprechender Information, die sich auf die entfernt angeordnete Kopie bezieht, um festzustellen, ob die entfernt angeordnete Kopie aktueller ist als die örtliche Kopie, und
wenn der entfernt angeordnete Knoten feststellt, dass die entfernt angeordnete Kopie aktueller ist, Senden einer Kopie oder Einzelheiten der Unterschiede von dem entfernt angeordneten Knoten zu dem örtlichen Knoten (154), um es diesem zu ermöglichen, seine Kopie (156) zu aktualisieren, und
wenn der entfernt angeordnete Knoten feststellt, dass die örtliche Kopie aktueller ist, Aktualisieren, an dem entfernt angeordneten Knoten, seiner eigenen Kopie (158) durch Anfordern der erforderlichen Information von dem örtlichen Knoten.

2. Verfahren nach Anspruch 1, das weiterhin den Schritt der Feststellung umfasst, ob der Inhalt der entfernt angeordneten Kopie der gleiche ist, wie der Inhalt der örtlichen Kopie, und Einleiten, an dem entfernt angeordneten Knoten, eines Konfliktauflösungsprozesses in dem Fall, in dem der Vergleich keine Differenz zwischen der Information, die anzeigt wie aktuell die örtliche Kopie ist und der entsprechenden Information zeigt, die sich auf die entfernt angeordnete Kopie bezieht, sich die jeweiligen Inhalte jedoch unterscheiden.

3. Verfahren nach Anspruch 1 oder 2, das weiterhin den vorangehenden Schritt umfasst, dass während einer Trennung der Verbindung aufgezeichnet wird, welche Teile an dem anderen Knoten modifiziert wurden, wobei die von dem entfernt angeordneten Clienten-Knoten empfangene Information sich auf die Teile bezieht, die von dem anderen Knoten als modifiziert aufgezeichnet wurden.

4. Verfahren nach Anspruch 3, bei dem der Vergleichsschritt für jeden der aufgezeichneten und während der Trennung der Verbindung modifizierten Teile ausgeführt wird, bevor der Vergleichsschritt für einen Teil ausgeführt wird, der nach der Wiederherstellung der Verbindung modifiziert wird.

5. Verfahren nach einem der vorhergehenden Ansprüche, das weiterhin den Schritt der Sperrung der entfernt angeordneten Kopie zum Verhindern eines Zugriffs auf diese während des Vergleichsschrittes umfasst.

6. Verfahren nach einem der vorhergehenden Ansprüche, bei dem die an den Knoten gespeicherten Kopien der Daten eine Kopie von weniger als allen Elementen einer Datenbank umfassen, und bei dem die Daten objektorientierte Daten umfassen.

7. Verfahren nach einem der vorhergehenden Ansprüche, das weiterhin den Schritt der Weiterleitung der aktuelleren Kopie von dem entfernt angeordneten Clienten-Knoten zu einem zweiten anderen Knoten umfasst, der ebenfalls eine Kopie des Teils der Daten hat, wenn eine Verbindung mit dem zweiten anderen Knoten hergestellt wird.

8. Verfahren nach einem der vorhergehenden Ansprüche, bei dem der andere Knoten den Server-Knoten umfasst.

9. Verfahren nach einem der vorhergehenden Ansprüche, das weiterhin die folgenden Schritte umfasst:
Speichern, an dem entfernten Clienten-Knoten, einer Aufzeichnung von Transaktionen, die die entfernt angeordnete Kopie betreffen, vor dem Vergleichsschritt; und
Rückgängigmachen zumindest einiger der Transaktionen in dem Fall, in dem von dem Vergleichsschritt festgestellt wird, dass die örtliche Kopie aktueller ist als die entfernt angeordnete Kopie.

10. Clienten-Knoten zur Verwendung in einem Netzwerk von Knoten, wobei Kopien von Daten an den Knoten gespeichert werden und einer der Knoten einen Server bildet, während andere der Knoten für andere Klienten an entfernt angeordneten Stellen bestimmt sind, wobei die Knoten intermittierend miteinander verbunden werden, und der Clienten-Knoten eine Anwendung aufweist, die die Daten verwendet, wobei der Clienten-Knoten folgendes umfasst:
eine Verbindungs-Abwicklungs-Einrichtung, um nach der Wiederherstellung einer Verbindung zwischen dem Clienten-Knoten und einem anderen der Knoten, von dem anderen Knoten Informationen bezüglich eines Teils der Daten zu empfangen, von denen eine entfernt angeordnete Kopie an dem Clienten-Knoten und eine örtliche Kopie an dem anderen Knoten vorliegt, wobei die Information zeigt, wie aktuell die örtliche Kopie ist;
einen Vergleicher zum Vergleich der empfangenen Informationen, die sich auf die örtliche Kopie beziehen, mit entsprechenden Informationen, die sich auf die entfernt angeordnete Kopie beziehen, um festzustellen, ob die örtliche Kopie aktueller ist als die entfernt angeordnete Kopie; und
eine Datenabwicklungseinrichtung, um zu bewirken, dass,
wenn der entfernt angeordnete Knoten feststellt, dass die entfernt angeordnete Kopie aktueller ist, der entfernt angeordnete Knoten eine Kopie oder Einzelheiten hinsichtlich der Unterschiede an den örtlichen Knoten (154) sendet, um es diesem zu ermöglichen, seine Kopie (156) zu aktualisieren, und
wenn der entfernt angeordnete Knoten feststellt, dass die örtliche Kopie aktueller ist, der entfernt angeordnete Knoten seine eigene Kopie (158) durch Anfordern der erforderlichen Information von dem örtlichen Knoten aktualisiert.

11. Clienten-Knoten nach Anspruch 10, der weiterhin eine Überwachungseinrichtung zur Überwachung des Zustands von Verbindungen zu benachbarten Knoten umfasst.

12. Clienten-Knoten nach Anspruch 10 oder 11, der weiterhin eine Registratur zur Speicherung einer Anzeige darüber umfasst, welche Teile der Daten durch Knoten gespeichert werden, die dem Clienten-Knoten benachbart sind.

13. Clienten-Knoten nach einem der Ansprüche 10 bis 12, der weiterhin einen Prozessor zur Erzeugung und Speicherung einer Anzeige umfasst, ob die örtliche Kopie geändert wurde.

## Revendications

1. Procédé pour maintenir une cohérence réciproque entre des copies de données stockées sur des noeuds dans un réseau, les noeuds comprenant un noeud serveur (20) et un nombre de noeuds clients (30) à des emplacements distants, les noeuds étant connectés de façon intermittente, les noeuds clients comprenant des applications utilisant les données, le procédé comprenant les étapes, sur un noeud client distant parmi les noeuds clients, consistant à :
suivre une reconnexion entre le noeud client distant et un autre des noeuds, recevoir de cet autre noeud des informations concernant une partie des données dont il existe une copie locale sur l'autre noeud et une copie distante sur le noeud client distant, les informations indiquant le niveau de mise à jour de la copie locale ;
comparer (152) sur le noeud client distant, les informations reçues concernant la copie locale avec les informations correspondantes concernant la copie distante pour déterminer si la copie distante est plus à jour que la copie locale ; et,
si le noeud distant détermine que la copie distante est plus à jour, le noeud distant envoyant une copie ou le détail des différences au noeud local (154) pour le déclencher afin qu'il effectue une mise à jour de sa copie (156), et,
si le noeud distant détermine que la copie locale est plus à jour, le noeud distant mettant à jour sa propre copie (158), en demandant les informations nécessaires au noeud local.

2. Procédé selon la revendication 1 comprenant en outre l'étape consistant à déterminer si le contenu de la copie distante est le même que le contenu de la copie locale et à amorcer, sur le noeud distant, un processus de résolution de conflit si la comparaison ne montre pas une différence entre les informations indiquant le niveau de mise à jour de la copie locale et les informations correspondantes concernant la copie distante, mais que les contenus respectifs diffèrent.

3. Procédé selon les revendications 1 ou 2 comprenant en outre les étapes préliminaires, lors d'une déconnexion, consistant à enregistrer les parties qui ont été modifiées sur l'autre noeud, dans lequel les informations reçues par le noeud client distant concernent les parties enregistrées par l'autre noeud comme ayant été modifiées.

4. Procédé selon la revendication 3 dans lequel l'étape de comparaison est effectuée pour chacune des parties enregistrées modifiées lors de la déconnexion, avant de procéder à l'étape de comparaison pour une partie modifiée après la reconnexion.

5. Procédé selon l'une quelconque des revendications précédentes comprenant en outre l'étape consistant à verrouiller la copie distante pour en empêcher l'accès lors de l'étape de comparaison.

6. Procédé selon l'une quelconque des revendications précédentes dans lequel les copies de données stockées dans les noeuds comprennent une copie de moins que tous les éléments d'une base de données, et dans lequel les données comprennent des données orientées objet.

7. Procédé selon l'une quelconque des revendications précédentes comprenant en outre l'étape consistant à transmettre la copie plus à jour depuis le noeud client distant vers un autre deuxième noeud, qui dispose également d'une copie de la partie des données, lorsqu'une connexion est effectuée avec l'autre deuxième noeud.

8. Procédé selon l'une quelconque des revendications précédentes, dans lequel l'autre noeud comprend le noeud serveur.

9. Procédé selon l'une quelconque des revendications précédentes comprenant en outre les étapes consistant à :
stocker dans le noeud client distant un enregistrement de transactions impliquant la copie distante avant l'étape de comparaison ; et
remédier au moins à certaines des transactions si l'étape de comparaison détermine que la copie locale est plus à jour que la copie distante.

10. Noeud client pour une utilisation dans un réseau de noeuds, des copies de données étant stockées sur les noeuds, un des noeuds comprenant un serveur et d'autres des noeuds étant pour d'autres clients à des emplacements distants, les noeuds étant connectés de façon intermittente, le noeud client comprenant une application utilisant les données, le noeud client comprenant :
un gestionnaire de connexion pour recevoir, suite à une reconnexion entre le noeud client et un autre des noeuds, depuis l'autre noeud, des informations concernant une partie des données dont il existe une copie distante sur le noeud client et une copie locale sur l'autre noeud ; les informations indiquant le niveau de mise à jour de la copie locale ;
un comparateur pour comparer les informations reçues concernant la copie locale avec les informations correspondantes concernant 1a copie distante pour déterminer si la copie locale est plus à jour que la copie distante ; et
un gestionnaire de données pour que,
si le noeud distant détermine que la copie distante est plus à jour, le noeud distant envoie une copie ou le détail des différences au noeud local (154) pour le déclencher afin qu'il effectue une mise à jour de sa copie (156), et,
si le noeud distant détermine que la copie locale est plus à jour, le noeud distant mette à jour sa propre copie (158), en demandant les informations nécessaires au noeud local.

11. Noeud client selon la revendication 10 comprenant en outre un moniteur pour contrôler l'état des connexions à des noeuds avoisinants.

12. Noeud client selon la revendication 10 ou la revendication 11 comprenant en outre un registre pour stocker une indication des parties des données stockées par des noeuds avoisinant le noeud client.

13. Noeud client selon l'une quelconque des revendications 10 à 12 comprenant en outre un processeur pour générer et stocker une indication d'une modification éventuelle de la copie locale.
